# EUROPÄISCHE PATENTSCHRIFT

(11) **EP 0 239 009 B1**
(45) Veröffentlichungstag und Bekanntmachung des Hinweises auf die Patenterteilung: **01.06.1994**
(21) Anmeldenummer: 87104047.3
(22) Anmeldetag: 19.03.1987
(51) Int. Cl.: F16K 1/08, F16K 1/34

(54) **Hubventil**
Lift valve
Clapet

(30) Priorität: 22.03.1986 DE 3609772
(43) Veröffentlichungstag der Anmeldung: 30.09.1987
(73) Patentinhaber: KSB Aktiengesellschaft, 67227 Frankenthal (DE)
(72) Erfinder: Illy, Alois, D-6703 Limburgerhof (DE); Alberti, Günter, D-6710 Frankenthal (DE); Feierlein, Karlheinz, D-8549 Abenberg (DE)

(56) Entgegenhaltungen:
- DE-B- 1 053 263
- DE-C- 259 264
- DE-C- 546 464
- DE-C- 650 076
- DE-C- 655 670

## Beschreibung

Die Erfindung betrifft ein Hubventil gemäß dem Oberbegriff des Hauptanspruches.

Aus der DE-PS 546 464 ist ein dem Oberbegriff entsprechendes Hubventil bekannt, bei dem die Sitzfläche schräg zur Rohrleitungsachse angeordnet ist. Die Sitzfläche entspricht hier einem Schrägschnitt durch einen Kreiskegel. Der Absperrkörper selbst ist ein Kegelstumpf, der zentrisch auf einer Ventilspindel befestigt und im Gehäuse gegen Verdrehung gesichert ist. Dieses Ventil weist einen strömungsgünstigen Gehäusedurchgang auf, es muß jedoch mit Problemen bei der Sitzabdichtung aufgrund der schrägen Anordnung der Sitzfläche gerechnet werden, und zwar durch unzureichende Anpressung in denjenigen Bereichen der Dichtfläche, die in der von der Rohrleitungs- und der Spindelachse gebildeten Ebene am weitesten von der Spindelachse entfernt sind.

Eine andere Konstruktion ist durch die EP-A 0 109 626 bekannt. Es handelt sich hierbei um ein Membranabsperrventil, welches mit einem schräg zur Rohrleitungsachse angebrachten Gehäusesitz zusammenwirkt. Aus diesem Grunde ist an der Membran ein Absperrkörper angebracht, der durch die Membran in seiner Position zum Gehäusesitz gehalten wird. Eine im Gehäuseoberteil angebrachte Spindel wirkt unter Zwischenschaltung kräfteübertragender Mittel auf den an der Membran angebrachten Absperrkörper ein. Da der Absperrkörper fest mit der Membran verbunden ist, wirkt diese Armatur gewissermaßen wie eine Absperrklappe, da sich der Absperrkörper in dem dem Gehäuseoberteil nächstgelegenen Teil der Dichtfläche abstützt und um diesem Punkt in Öffnungs- bzw. Schließstellung geschwenkt wird. Dieser Absperrkörper ist nur funktionsfähig in Verbindung mit der Membran, da diese die Führung für den Absperrkörper übernimmt. Bedingt durch die hier gewählte Anordnung erfolgt eine einseitige Anpressung des Ventilkegels in dem Bereich der Dichtfläche, der der in den Zeichnungen dargestellten Spitze des Sitzkegels am nächsten liegt. Die einseitige Anpressung ergibt entweder zu niedrige Flächenpressungen in den schwach belasteten oder zu hohe Flächenpressungen in den stark belasteten Bereichen der Dichtfläche. Beides führt, auch bei weichdichtender Ausführung, zu Dichtheitsproblemen.

Der Erfindung liegt die Aufgabe zugrunde, ein strömungsgünstiges Hubventil zu entwickeln, bei dem durch die Ventilspindel eine stabile Anpressung in allen Bereichen der Dichtfläche erzielt wird und damit eine zuverlässige Abdichtung mit geringen Leckraten verwirklicht werden kann.

Die Lösung dieser Aufgabe erfolgt gemäß dem kennzeichnenden Teil des Hauptanspruches. Bedingt durch die exzentrische Krafteinleitung, d. h. in der von der Dichtfläche umschlossenen Sitzfläche besteht eine Exzentrizität zwischen der Wirkungsrichtung der Spindelkraft und der Achse des trichter- oder kegelförmigen Körpers und in Verbindung mit einem an sich bekannten schräg verlaufenden Dichtfläche zwischen Absperrorgan und Gehäuse tritt eine stabilisierende, zentrierende Wirkung auf den Absperrkörper in dem Bereich der Dichtfläche auf.

Nach einer Ausgestaltung der Erfindung, verläuft die Achse des Körpers im Winkel zur Wirkungsrichtung der Spindelkraft, wobei der Schnittpunkt zwischen der Wirkungsrichtung der Spindelkraft und der Achse des trichter- oder kegelförmigen Körpers von der Spitze des Körpers weiter entfernt ist als der Schnittpunkt der von der Dichtfläche umschlossenen Sitzfläche mit der Achse von Körpers. Dies bewirkt eine noch genauere Vergleichmäßigung der Anpreßkräfte im Bereich der Dichtfläche. Die optimale Lage des Schnittpunktes der Wirkungsrichtung der Spindelkraft mit der von der Dichtfläche umschlossenen Sitzfläche sowie dem Neigungswinkel der Achse des trichter- oder kegelförmigen Körpers läßt sich auf einfache Weise durch Bildung der Resultierenden aus der als gleichmäßig angenommenen Dichtflächenpressung ermitteln. Der Einfluß des Differenzdruckes bei ein- oder beidseitiger Durchströmung kann dabei in die Optimierung einbezogen werden.

Eine einfachere Fertigung der Armatur ist nach einer anderen Ausgestaltung der Erfindung möglich, wonach das im Absperrkörper gelagerte Ende der Spindel an einer exzentrisch zur Spindelachse angeordneten Lagerstelle anliegt. Die so geschaffene Möglichkeit zur Einleitung der Spindelkräfte in den Absperrkörper weist den Vorteil einer einfachen Fertigung von Gehäuse, Spindel und Absperrkörper auf. Das dabei in das Spindelende eingeleitete Biegemoment kann in zuverlässiger Weise durch entsprechende Dimensionierung beherrscht werden.

Eine andere Ausgestaltung ist im kennzeichnenden Teil des Anspruches 5 enthalten. Damit wird erreicht, daß bei der Schließbewegung der auf dem Absperrkörper lastende Differenzdruck den Absperrkörper gleichmäßig in den Sitz hineinpreßt und es ausgeschlossen ist, daß eine partielle Durchbiegung des Absperrkörper und damit eine Undichtigkeit auftritt. Weiter wird der Absperrkörper zuverlässig in seinem Dichtsitz zentriert.

Eine weitere Ausgestaltung der Erfindung sieht vor, daß die am Absperrkörper und/oder im Gehäuse angebrachte Dichtfläche nachgiebig ausgebildet ist. Hierbei kann es sich sowohl um eine elastische als auch um eine plastische Nachgiebigkeit handeln. Dies ist abhängig von dem jeweiligen Anwendungsfall, wobei die elastische Nachgiebigkeit für metallische und elastomere Abdichtungen bevorzugt wird, während die plastische Abdichtung bei Kunststoffen Verwendung findet. Somit kann eine druckunterstützte Anpressung verwirklicht werden und eventuelle Verformungen ausgeglichen werden.

Nach einer weiteren Ausgestaltung der Erfindung sind am Absperrkörper und/oder am Gehäuse ein oder mehrere in Richtung der Spindelachse verlaufende Führungen angebracht. Je nach den innerhalb des Gehäuses auftretenden Kräften, die abhängig sind von den äußeren Abmessungen der gesamten Armatur und dem Differenzdruck, kann eine derartige Gestaltung sinnvoll sein. Somit werden Beschädigungen des Absperrkörpers verhindert, falls dieser aufgrund des Flüssigkeitsdruckes und der Elastizität der Spindel einseitig anliegend in den Ventilsitz eingepreßt wird. Die Führungen, die auch die Aufgaben einer Verdrehsicherung haben können, stellen sicher, daß ein zentrisches Einführen des Absperrkörpers in den zugehörigen Sitz gewährleistet wird.

Eine andere Ausgestaltung sieht vor, daß der Absperrkörper und/oder die Spindel sowie das Gehäuse und/oder der Deckel mit einer oder mehreren Führungen versehen sind, die beim Öffnen des Ventils eine Hub-Drehbewegung des Absperrkörpers erzwingen. Dadurch kann eine Verringerung des Durchflußwiderstandes bewirkt werden, da aufgrund der Verschwenkbewegung der Absperrkörper so aus der Strömungsrichtung geschwenkt wird, daß er einen sehr kleinen Strömungswiderstand bildet. Auch kann dadurch die Hubbewegung des Absperrkörpers minimiert werden.

Eine weitere Ausgestaltung der Erfindung sieht vor, daß die von der Dichtfläche umschlossene Sitzfläche eben oder räumlich gekrümmt ist. Diese ermöglicht eine weitere Verringerung des Durchflußwiderstandes sowie eine günstige Beeinflussung der Lage der Resultierenden aus der Dichtflächenpressung.

Ausführungsbeispiele der Erfindung sind in den Zeichnungen dargestellt und werden im folgenden näher erläutert. Es zeigen die
- Fig. 1: einen Querschnitt durch ein erfindungsgemäßes Hubventil mit prinzipieller Darstellung der Wirkungsweise, die
- Fig. 2: eine entsprechende Darstellung mit einem zur Spindelachse geneigt angeordneten Verlauf der Achse des die Dichtfläche einhüllenden Körpers, die
- Fig. 3: eine Ausbildung mit zentrischer Anordnung der Ventilspindel und exzentrischem Krafteinleitungspunkt, die
- Fig. 4: eine vergrößerte Darstellung einer vorteilhaften Dichtflächengeometrie, die
- Fig. 5 und 6: elastisch nachgiebig ausgebildete Dichtflächen, die
- Fig. 7 und 8: einen mit Führungen versehenen Absperrkörper, die
- Fig. 9: eine Ausführungsform, bei der der Absperrkörper nach einer Hubbewegung eine Hub-Drehbewegung ausführt und die
- Fig. 10: ein Hubventil mit Zugspindel.

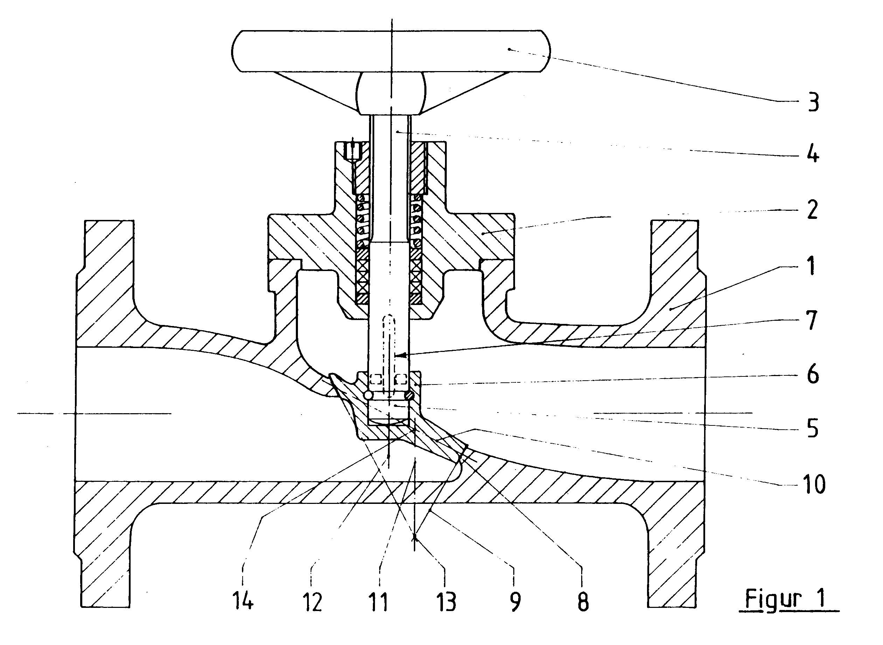

In der Fig. 1 ist ein Hubventil gezeigt, dessen Gehäuse (1) mit einem Deckel (2) verschlossen ist, in dem eine durch ein Handrad (3) betätigte Spindel (4) flüssigkeitsdicht gelagert ist. Die hier steigend und drehend ausgebildete Spindel weist an ihrem im Gehäuse befindlichen Ende (5) einen Absperrkörper (6) auf, der mit Hilfe einer im Gehäuse (1) angeordneten Führung (7) gegen Verdrehung gesichert ist. Somit führt bei der Verdrehbewegung der Spindel (4) der Absperrkörper (6) eine geradlinige Hubbewegung aus. Die zwischen Gehäuse (1) und Absperrkörper (6) befindliche Dichtfläche (8) ist Bestandteil eines schrägen Schnittes durch einen trichter- oder kegelförmigen Körper (9). Die von der Dichtfläche (8) umschlossene Sitzfläche (10), die der Schnittfläche entspricht, verläuft schräg zur Achse (11) des Körpers (9). Es sind auch andere, z. B. ballige Dichtflächen möglich, bei denen der Körper (9) als Einhüllende von an die Dichtfläche (8) gelegte Tangentialebenen gebildet wird. Die in diesem Beispiel gezeigte Spindelachse (12) ist gleichbedeutend mit der Wirkungsrichtung der Spindelkraft und verläuft parallel zur Achse (11) des Körpers (9). Der Gehäusedeckel (2) liegt konzentrisch zur Spindelachse(12), wobei beide Teile zusammen konzentrisch innerhalb des Gehäuses angeordnet sind, während die Achse (11) des Körpers (9) exzentrisch zur Spindelachse innerhalb des Gehäuses (1) angebracht ist. Das Ende (5) der Spindel (4) leitet hierbei die Spindelkräfte in denjenigen Bereich des Absperrkörpers (6) ein, der zu der Spitze (13) des Körpers (9) einen größeren Abstand hat als der Schnittpunkt (14) der von der Sitzfläche (10) mit der Achse (11) gebildet wird. Der trichter- oder kegelförmige Körper kann als Kreiskegel, elliptischer Kegel oder als ein kreisförmig geschnittener elliptischer Kegel ausgebildet werden. Die Sitzabdichtung kann hart- oder weichdichtend sein. Es sind flächige, ballige oder kantenförmige Sitzformen möglich.

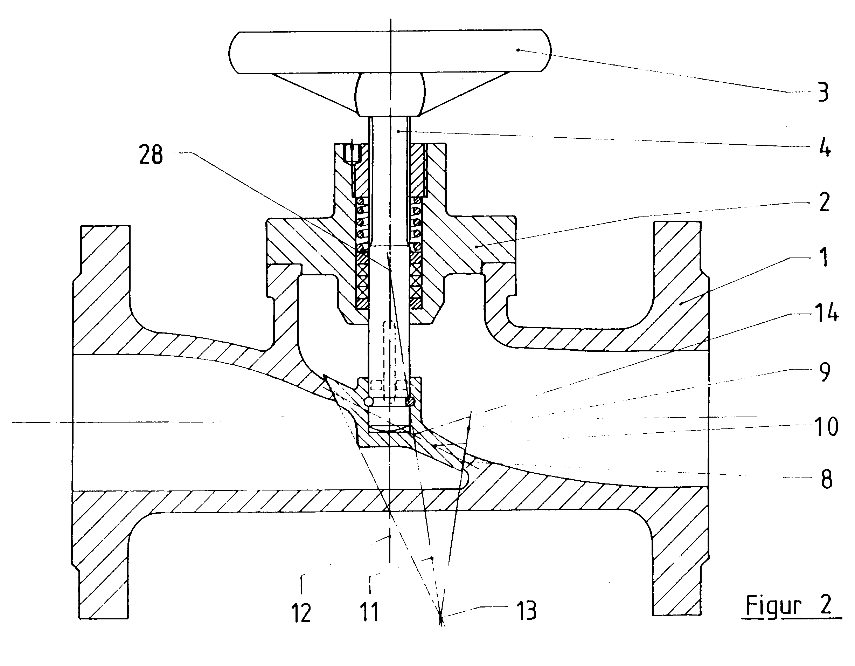

Die Fig. 2 zeigt eine Ausführungsform, bei der die Achse (11) des Körpers (9) schräg zur Spindelachse (12) verläuft. Hierbei ist der Schnittpunkt (28) zwischen der Wirkungsrichtung der Spindelkraft und der Achse (11) des Körpers (9) von der Spitze (13) des Körpers (9) weiter entfernt als der Schnittpunkt (14) der von der Dichtfläche (8) umschlossenen Sitzfläche (10) mit der Achse (11) des Körpers (9).

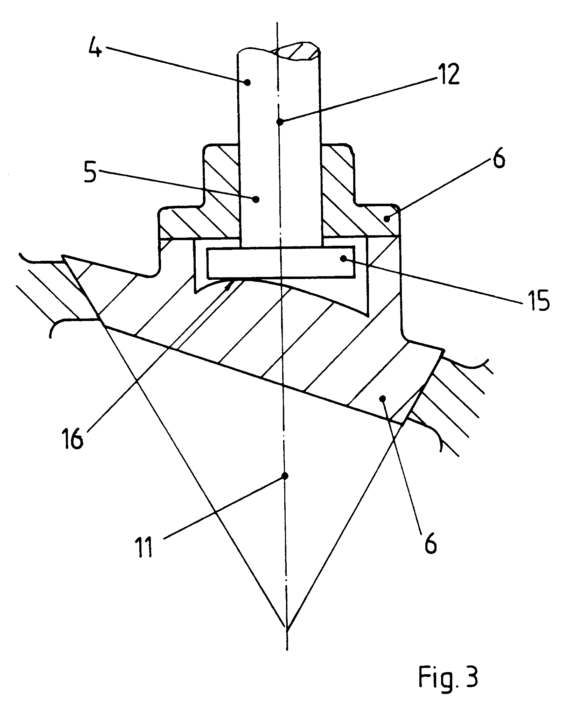

Die Fig. 3 zeigt eine Ausführungsform, bei der die Spindelachse (12) und die Achse (11) zusammenfallen und ein am Spindelende (5) angebrachter Bund (15) auf eine exzentrisch angebrachte Lagerstelle (16) des Absperrkörpers (6) einwirkt. Damit wird ebenfalls eine zuverlässige Anpressung und gleichmäßige Dichtkraft im Ventilsitz erreicht. Das zwischen dem Punkt (16) und der Spindelachse (12) auftretende Biegemoment kann in einfacher Weise durch eine entsprechend steife Ausbildung der Spindel (4) erfaßt werden. Es beeinflußt die Lage des Absperrkörpers (6) nicht, wenn er mit ausreichendem Spiel mit der Spindel (4) verbunden ist.

Diese Ausführungsform bietet sich für Konstruktion mit nicht drehender Spindel (4) an, da damit ein Verschleiß im Bereich des Punktes (16) ausgeschlossen wird.

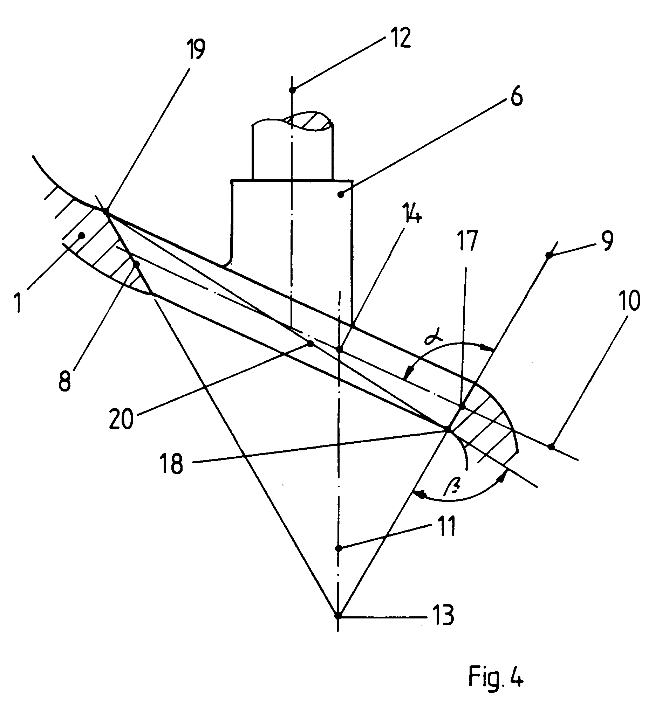

Die Fig. 4 zeigt eine vorteilhafte Gestaltung einer Sitzgeometrie des Hubventils. Die zwischen Absperrkörper (6) und dem Gehäuse (1) angebrachte Dichtfläche (8) weist eine flächige Anlage auf. Die von der Dichtfläche (8) umschlossene Sitzfläche (10) schneidet die Wandung oder Kontur des Körpers (9) in einem Bereich (17), welcher der Spitze (13) des Körpers (9) am nächsten gelegen ist. Die Sitzfläche (10) schließt mit der Dichtfläche (8) im Bereich (17) einen Winkel (α) ein, der gleich oder größer 90° ist. Die Dichtfläche (8) weist zwei Punkte (18, 19) auf, die zur Spitze (13) des Körpers (9) am nächsten bzw. am weitesten entfernt gelegen sind. Trägt man in die Projektion der Dichtfläche (8) zwischen den Punkten (18, 19) der Dichtfläche (8) eine Verbindende (20) ein, so schließt diese im Bereich des Punktes (18) mit der Wandung des Körpers (9) einen Winkel (β) ein, der gleich oder kleiner 90° ist.

Bedingt durch diese Gestaltung der Dichtfläche wird sichergestellt, daß auch beim Anliegen eines Druckes auf der Spindelseite des Absperrkörpers (6) ein Hindurchdrücken durch den Gehäusesitz verhindert wird.Weiter wird eine äußerst stabile Lage des Absperrkörpers (6) innerhalb des Gehäusesitzes erlangt. In denjenigen Anwendungsfällen, bei denen die von der Dichtfläche (8) umschlossene Sitzfläche (10) einen räumlich gekrümmten Verlauf aufweist, schneidet die Spindelachse (12) denjenigen Bereich der Sitzfläche (10) der zwischen dem Schnittpunkt (14) und dem von der Spitze (13) am weitesten entfernt liegenden Bereich um den Punkt (19) liegt.

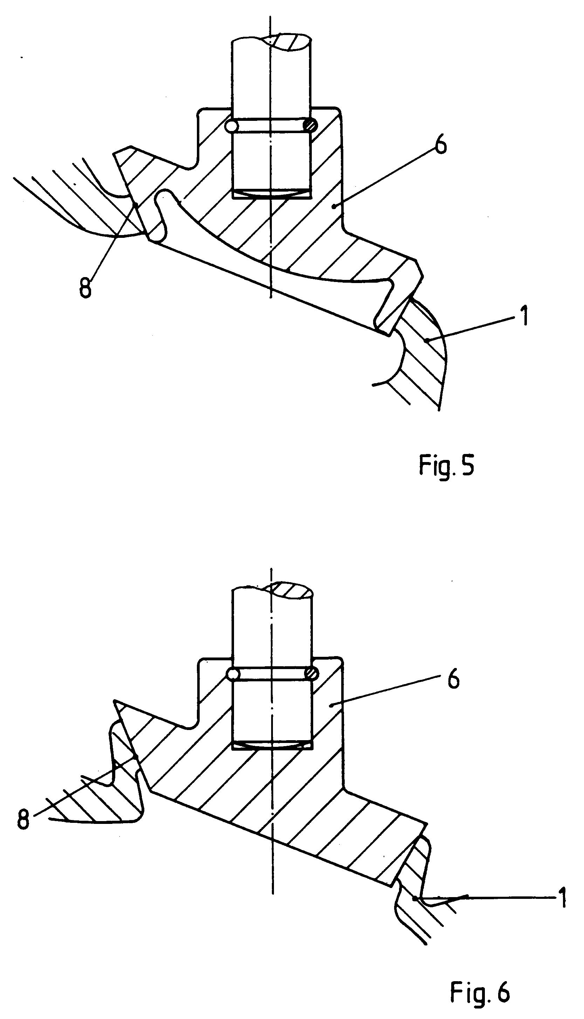

Die Fig. 5 und 6 zeigen Ausführungsformen, bei denen gemäß Fig. 6 im Gehäuse ein elastisch nachgiebiger Gehäusesitz angebracht ist oder, wie in der Fig. 5 gezeigt, bei dem am Absperrkörper (6) ein nachgiebig ausgebildeter Sitz angebracht ist. Mittels dieser Maßnahme können durch die Fertigung bedingte Toleranzen ausgeglichen werden. Desweiteren können durch Wärme oder Druckbelastungen sowie Rohrleitungskräfte bedingte Verformungen ausgeglichen werden.

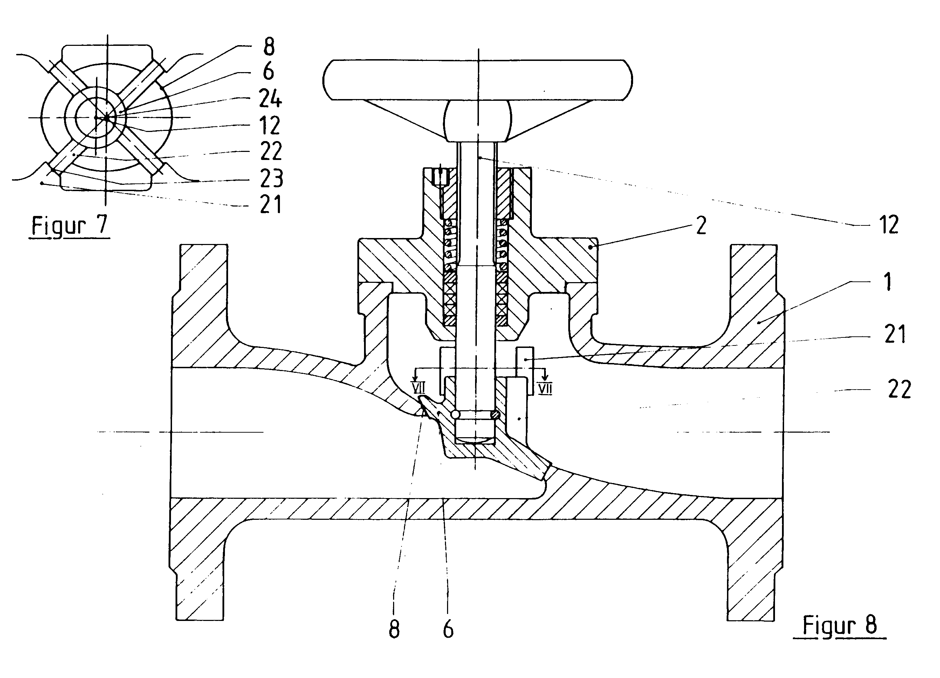

Die Ausführungsform der Fig. 7, die einem Schnitt VII-VII aus Fig. 8 entspricht, zeigt eine erfindungsgemäße Gestaltung des Ventils, bei dem innerhalb des Gehäuses angebrachte Führungen (21) mit Führungsflächen (23) versehen sind, wobei die Führungsflächen eine Form aufweisen, die auf der Kontur eine gemeinsamen Zylinders mit der Achse (24) liegen. Am Absperrkörper (6) angebrachte Führungsleisten (22) wirken in entsprechender Weise mit den Führungen (21) zusammen. Somit lassen sich bei diesem Ausführungsbeispiel bei der Bearbeitung des Gehäuses in einer Aufspannung die Führungsflächen (23), die Dichtfläche (8) sowie die Passung für den Gehäusedeckel (2) herstellen. Bei großen Gehäusenennweiten und damit großen Durchflußmengen bzw. bei hohen Differenzdrücken verhindern diese Führungen, daß eine unzulässige Biegebelastung auf die Ventilspindel (4) einwirkt. Sie gewährleisten eine sichere Führung des Absperrkörpers (6) und wirken gleichzeitig als Verdrehsicherung. Denn aufgrund der exzentrischen Anordnung der Spindelachse (12) zur Achse (24) der Führungsflächen (23) wird eine Verdrehung des Absperrkörpers (6) verhindert. Es sind auch andere entsprechende Führungen verwendbar.

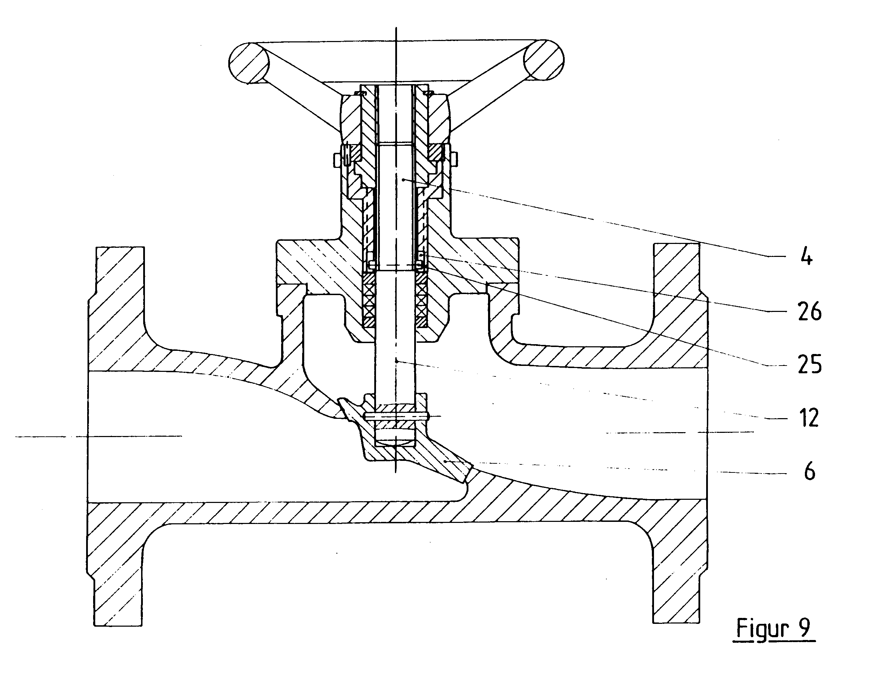

Die Fig. 9 zeigt einen Querschnitt durch ein Hubventil, dessen Absperrkörper (6) nach einer Hubbewegung eine Hub-Drehbewegung um die Spindelachse (12) ausführt. Zu diesem Zweck ist die Spindel (4) mit einem Querstift (25) versehen, der in einander gegenüberliegenden Führungsnuten (26) eingreift. In der der Schließstellung des Absperrkörpers (6) entsprechenden Stellung weisen die Nuten (26) einen sich in Richtung der Spindelachse erstreckenden geraden Verlauf auf. Daran schließt sich ein schraubenförmiger Verlauf an, wodurch sichergestellt ist, daß nach einer geradlinigen Hubbewegung die Spindel dem Kurvenverlauf der Nuten (26) folgt und somit den Absperrkörper (6) verdreht. Zu diesem Zweck ist der Absperrkörper (6) drehfest mit der Spindel (4) verbunden. Entsprechend der Gehäusekonfiguration kann eine bis zu 180° reichende Schwenkbewegung des Absperrkörpers (6) erfolgen. Es sind auch entsprechend andere Ausführungsformen der Verdreheinrichtung vorstellbar.

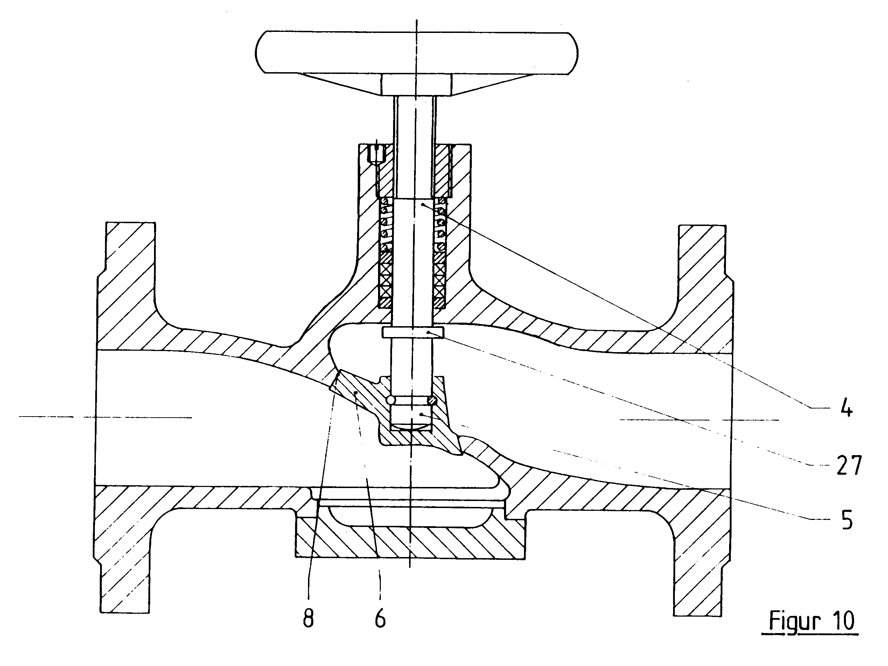

Die Fig. 10 zeigt eine Ausführungsform, bei der der Absperrkörper (6) mittels einer Zugspindel (4) in die Dichtfläche (8) gepreßt wird. Aus Dichtheitsgründen ist der Absperrkörper (6) mit einer Sackbohrung versehen, in der das Ende (5) der Spindel (4) befestigt ist. Zur Verdrehsicherung des Absperrkörpers (6) können die verschiedenen bekannten Verdrehsicherungen verwendet werden.

Es handelt sich hierbei um eine Armatur, bei der verhindert wird, daß in Störfällen die Spindel (4) aus dem Gehäuse herausgedrückt werden kann. Je nach Durchflußrichtung würde entweder die Spindel mit dem Absperrkörper (6) in das Gehäuse hineingezogen werden oder das Absperrorgan (6) fest in die Dichtfläche (8) hineingepreßt werden. Würde sich in einem denkbar ungünstigsten Fall der Absperrkörper (6) von der Spindel (4) lösen, dann verhindert ein Bund (27), daß die Spindel (4) aus dem Gehäuse herausgedrückt wird.

## Patentansprüche

1. Hubventil, dessen Spindel (4) mit einem innerhalb eines Gehäuses (1) angeordneten, von der Spindel (4) gehaltenen Absperrkörper (6) verbunden ist, eine schräg zur Spindelachse (12) verlaufende Sitzfläche (10) aufweist, wobei die Dichtfläche (8) verjüngt ausgebildet ist und in einer Schnittfläche angeordnet ist, die einem schrägen Schnitt durch die Achse (11) eines trichter- oder kegelförmigen Körpers (9) entspricht, **dadurch gekennzeichnet,** daß die Wirkungsrichtung der Spindelkraft die von der Dichtfläche (8) umschlossene Sitzfläche (10) in dem Bereich schneidet, der von der Spitze (13) des Körpers (9) weiter entfernt ist als der Schnittpunkt (14) der von der Dichtfläche (8) umschlossenen Sitzfläche (10) mit der Achse (11) des Körpers (9).

2. Hubventil nach Anspruch 1, dadurch gekennzeichnet, daß die Achse (11) des Körpers (9) im Winkel zur Wirkungsrichtung der Spindelkräft verläuft, wobei der Schnittpunkt (28) zwischen der Wirkungsrichtung der Spindelkraft und der Achse (11) von der Spitze (13) des Körpers (9) weiter entfernt ist als der Schnittpunkt (14) der von der Dichtfläche (8) umschlossenen Sitzfläche (10) mit der Achse (11) des Körpers (9).

3. Hubventil nach Anspruch 1, dadurch gekennzeichnet, daß die Achse (11) des Körpers (9) und die Wirkungsrichtung der Spindelkraft parallel zueinander verlaufen.

4. Hubventil nach den Ansprüchen 1 bis 3, dadurch gekennzeichnet, daß das im Absperrkörper (6) gelagerte Ende (5, 15) der Spindel (4) an einer exzentrisch zur Spindelachse (12) angeordneten Lagerstelle (16) anliegt.

5. Hubventil nach den Ansprüchen 1 bis 4, dadurch gekennzeichnet, daß in demjenigen Bereich der Dichtfläche (8), der der Spitze (13) des Körpers (9) am nächsten gelegen ist, die Dichtfläche (8) mit der von ihr umschlossenen Sitzfläche (10) einen Winkel (α) einschließt, der gleich oder größer 90° ist und daß eine Verbindende (20) zwischen den beiden Punkten (18, 19) der Dichtfläche (8), die von der Spitze (13) des Körpers (9) den größten und den kleinsten Abstand haben, im Bereich des der Spitze (13) am nächsten gelegenen Punktes (18) der Dichtfläche (8) mit der Dichtfläche (8) einen Winkel (β) einschließt, der gleich oder kleiner 90° ist.

6. Hubventil nach den Ansprüchen 1 bis 5, dadurch gekennzeichnet, daß die am Absperrkörper (6) und/oder im Gehäuse (1) angebrachte Dichtfläche (8) nachgiebig ausgebildet ist.

7. Hubventil nach den Ansprüchen 1 bis 6, dadurch gekennzeichnet, daß am Absperrkörper (6) und/oder am Gehäuse (1) ein oder mehrere in Richtung der Spindelachse (12) verlaufende Führungen (21, 22, 23) angebracht sind.

8. Hubventil nach einem oder mehreren der Ansprüche 1 bis 7, dadurch gekennzeichnet, daß der Absperrkörper (6) und/oder die Spindel (4) sowie das Gehäuse (1) und/oder der Deckel (2) mit einer oder mehreren Führungen (25, 26) versehen sind, die beim Öffnen des Ventils eine Hub-Drehbewegung des Absperrkörpers (6) erzwingen.

9. Hubventil nach einem oder mehreren der Ansprüche 1 bis 8, dadurch gekennzeichnet, daß die von der Dichtfläche (8) umschlossene Sitzfläche (10) eben oder räumlich gekrümmt ist.

## Claims

1. A stem valve, whose stem (4) is connected with a valve member (6) arranged within a housing (1) and held by the stem (4) and which possesses a seat surface (10) extending obliquely in relation to the stem axis(12), the sealing surface (8) having a tapering design and being arranged in a section plane, which corresponds to an oblique section taken through the axis (11) of a funnel-shaped or conical body (9), characterized in that the direction of action of the stem force intersects the seat surface (10) enclosed by the sealing surface (8) in that part, which is further removed from the tip (13) of the body (9) than the point of intersection (14) of the seat surface (10) enclosed by the sealing surface (8) with the axis (11) of the body (9).

2. The stem valve as claimed in claim 1, characterized in that the axis (11) of the body (9) extends at an angle to the direction of action of the stem force, the point of intersection (28) between the direction of action of the stem force and the axis (11) being further removed from the tip (13) of the body (9) than the point (14) of intersection of the seat surface (10) enclosed by the sealing surface (8) with the axis (11) of the body (9).

3. The stem valve as claimed in claim 1, characterized in that the axis (11) of the body (9) and the direction of action of the stem force ARE parallel to one another.

4. The stem valve as claimed in any one of the claims 1 through 3, characterized in that the end (5 and 15), bearinged in the valve member (6), of the stem (4) abuts a bearing point (16) arranged eccentrically in relation to the stem axis (12).

5. The stem valve as claimed in any one of the claims 1 through 4, characterized in that in that part of the sealing surface (8), which is nearest to the tip (13) of the body (9), the sealing surface surrounds the seat surface (10) for an angle (α), which is equal to or larger than 90° and in that a line (20) running between the two points (18 and 19) of the sealing surface (8), which are at the maximum and minimum distance from the tip (13) of the body (9), encloses with the sealing surface (8) an angle (β), which is equal to or smaller than 90°, at the point (18), nearest to the tip (13) of the sealing surface (8).

6. The stem valve as claimed in any one of the claims 1 through 5, characterized in that the sealing surface (8) provided on the valve member (6) and/or in the housing (1) is adapted to yield.

7. The stem valve as claimed in any one of the claims 1 through 6, characterized in that on the valve member (6) and/or on the housing (1) one or more guides (21, 22 and 23) are arranged extending in the direction of the stem axis (12).

8. The stem valve as claimed in any one or more of the claims 1 through 7, characterized in that the valve member (6) and/or the stem (4) as well as the housing (1) and/or the cover (2) are provided with one or more guides (25 and 26), which on opening the valve produce a reciprocating and rotational movement of the valve member (6).

9. The stem valve as claimed in any one or more of the claims 1 through 8, characterized in that the sealing seat surface (10) enclosed by the sealing surface (8) is made flat or a three-dimensionally curved.

## Revendications

1. Soupape de levage dont la broche (4) est liée à l'intérieur d'un boîtier (1) à un appareil d'arrêt (6) qu'elle retient et présente une surface d'appui (10) inclinée par rapport à l'axe (12) de la broche, la surface d'étanchéité (8) étant de forme conique et placée dans une section qui correspond à une section oblique à travers l'axe (11) d'un corps (9) en forme d'entonnoir ou de cône caractérisée en ce que la direction d'action de la force de la broche coupe la surface d'appui (10) entourée par la surface d'étanchéité (8) dans la zone qui est plus éloignée de la pointe (13) du corps (9) que le point de section (14) de la surface d'appui (10) entourée de la surface d'étanchéité (8) avec l'axe (11) du corps (9).

2. Soupape de levage selon la revendication 1 caractérisée en ce que l'axe (11) du corps (9) forme angle avec la direction d'action de la force de la broche, le point de section (28) entre la direction d'action de la force de la broche et l'axe (11) étant plus éloigné de la pointe (13) du corps (9) que le point de section (14) de la surface d'appui (10) entourée de la surface d'étanchéité (8) avec l'axe (11) du corps (9).

3. Soupape de levage selon la revendication 1 caractérisée en ce que l'axe (11) du corps (9) et la direction d'action de la force de la broche sont parallèles.

4. Soupape de levage selon les revendications 1 à 3 caractérisée en ce que l'extrêmité (5, 15) de la broche (4) logée dans l'appareil d'arrêt (6) colle à un point d'appui (16) placé de manière excentrique par rapport à l'axe de la broche (12).

5. Soupape de levage selon les revendications 1 à 4 caractérisée en ce que, dans la zone de la surface d'étanchéité (8), qui est la plus proche de la pointe (13) du corps (9), la surface d'étanchéité (8) forme un angle (α) avec la surface d'appui (10) qui l'entoure, angle qui est égal ou supérieur à 90° et en ce qu'une ligne (20) qui relie les deux points (18, 19) de la surface d'étanchéité (8), points qui sont l'un le plus proche et l'autre le plus éloigné de la pointe (13) du corps (9), entoure dans la zone du point (18) de la surface d'étanchéité (8) qui est le plus proche de la pointe (13) forme un angle (β) avec la surface d'étanchéité (8) qui est égal ou inférieur à 90°.

6. Soupape de levage selon les revendications 1 à 5 caractérisée en ce que la surface d'étanchéité (8) placée sur l'appareil d'arrêt (6) et/ou sur le boîtier (1) est déformable.

7. Soupape de levage selon les revendications 1 à 6 caractérisée en ce que sont placés sur l'appareil d'arrêt (6) et/ou sur le boîtier (1) un ou plusieurs guidages (21, 22, 23) orientés dans le sens de l'axe de la broche (12).

8. Soupape de levage selon une ou plusieurs des revendications 1 à 7 caractérisée en ce que l'appareil d'arrêt (6) et/ou la broche (4) ainsi que le boîtier (1) et/ou le couvercle (2) sont munis d'un ou plusieurs guidages (25, 26) qui créent de force à l'ouverture de la soupape un mouvement de levage rotatif de l'appareil d'arrêt (6).

9. Soupape de levage selon une ou plusieurs des revendications 1 à 8 caractérisée en ce que la surface d'appui (10) entourée de la surface d'étanchéité (8) est courbée dans le plan ou dans l'espace.
